# EUROPÄISCHE PATENTSCHRIFT

(11) **EP 4 310 378 B1**
(45) Veröffentlichungstag und Bekanntmachung des Hinweises auf die Patenterteilung: **25.06.2025**
(21) Anmeldenummer: 23183828.5
(22) Anmeldetag: 06.07.2023
(51) Int. Cl.: F16L 17/067, F16L 37/248

(54) **KUPPLUNGSELEMENT FÜR EINE FLUIDKUPPLUNG SOWIE ENTSPRECHENDE FLUIDKUPPLUNG**
COUPLING ELEMENT FOR A FLUID COUPLING AND CORRESPONDING FLUID COUPLING
ÉLÉMENT D'ACCOUPLEMENT POUR UN ACCOUPLEMENT FLUIDIQUE ET RACCORD FLUIDIQUE CORRESPONDANT

(30) Priorität: 19.07.2022 DE 102022207365
(43) Veröffentlichungstag der Anmeldung: 24.01.2024
(73) Patentinhaber: Karasto Armaturenfabrik Oehler GmbH, 71522 Backnang (DE); Angst & Pfister Gesellschaft mit beschränkter Haftung, 70736 Fellbach (DE)
(72) Erfinder: RÖDLING, David, 71522 Backnang (DE); BUJARA, Thomas, 74248 Ellhofen (DE); SCHÄFER, Peter, 75053 Gondelsheim (DE)
(74) Vertreter: Dietz, Christopher Friedrich

(56) Entgegenhaltungen:
- DE-A1- 102017 219 116
- US-A1- 2004 026 873
- US-A1- 2017 130 882

## Beschreibung

Die Erfindung betrifft ein Kupplungselement für eine Fluidkupplung, mit Kopplungsmitteln zum reversiblen Koppeln des Kupplungselements mit einem Kupplungsgegenelement der Fluidkupplung und mit einem Dichtring zur Abdichtung einer Fluidverbindung bei mit dem Kupplungsgegenelement gekoppeltem Kupplungselement, wobei der Dichtring in einem Kupplungskörper des Kupplungselements drehbar angeordnet ist. Die Erfindung betrifft weiterhin eine Fluidkupplung. Aus dem Stand der Technik ist beispielsweise die Druckschrift DE 10 2017 219 116 A1 bekannt. Diese beschreibt ein Kupplungselement für eine Fluidkupplung, mit Kopplungsmitteln zum reversiblen Koppeln des Kupplungselements mit einem Kupplungsgegenelement der Fluidkupplung und mit einem Dichtring zur Abdichtung einer Fluidverbindung bei mit dem Kupplungsgegenelement gekoppeltem Kupplungselement. Dabei ist vorgesehen, dass der Dichtring mittels eines Lagerrings drehbar in einem Kupplungskörper des Kupplungselements gelagert ist.

Weiterhin beschreibt die Druckschrift US 2021/0123528 A1 eine ringförmige Dichtung für eine Rohrkupplung, mit einem unteren Teil, der in einer nach oben offenen Ringnut der Rohrkupplung angeordnet ist, und mit einem oberen Teil mit einer nach oben weisenden Anlagefläche, einer Schürze und einem Versteifungsring. Die Schürze ist dazu ausgestaltet, mit einer kreisförmigen Aufkantung der Rohrkupplung zusammen zu wirken, die sich innerhalb der ringförmigen Nut befindet. Der Versteifungsring ist innerhalb des oberen Teils der Dichtung angeordnet und weist einen ringförmigen Abschnitt, der im Allgemeinen parallel zu und beabstandet von einer Auflagefläche angeordnet ist, sowie einen Umfangsschenkel auf, der von dem ringförmigen Abschnitt ausgeht und eine Verstärkung für die Schürze bildet.

Während der Dichtring bei dem Kupplungselement der DE 10 2017 219 116 A1 drehbar ist und so bereits einen Kopplungsvorgang erleichtert, ist die Dichtung der US 2021/0123528 A1 durch ihr Eingreifen in die Ringnut in Umfangsrichtung festgelegt, was eine Drehbewegung der Rohrkupplung und folglich den Kopplungsvorgang erschwert. Die Druckschriften US 2004/026873 A1, US 2017/130882 A1 und DE 10 2017 219116 A1 offenbaren weitere Kupplungselemente aus dem Stand der Technik.

Es ist Aufgabe der Erfindung, ein Kupplungselement für eine Fluidkupplung vorzuschlagen, welches gegenüber bekannten Kupplungselementen Vorteile aufweist, insbesondere hervorragende Dichtungseigenschaften aufweist und eine schnelle und einfache Kopplung des Kupplungselements mit dem Kupplungsgegenelement ermöglicht.

Dies wird erfindungsgemäß mit einem Kupplungselement für eine Fluidkupplung mit den Merkmalen des Anspruchs 1 erreicht. Dabei ist vorgesehen, dass ein Grundkörper des Dichtrings bezüglich einer Längsmittelachse des Kupplungskörpers mit Spiel in axialer Richtung in einer in dem Kupplungskörper ausgestalteten Dichtungsaufnahme angeordnet ist und von dem Grundkörper in axialer Richtung eine elastische, insbesondere in radialer Richtung auslenkbare, Dichtlippe ausgeht, die in radialer Richtung nach innen geneigt ist und über die sich der Gleitring zumindest zeitweise, insbesondere gleitend, an einer die Dichtungsaufnahme in axialer Richtung begrenzenden Stützwand abstützt, insbesondere sodass bei einer Verlagerung des Dichtrings in axialer Richtung eine radiale Auslenkung der Dichtlippe erfolgt.

Vorteilhafte Ausgestaltungen mit zweckmäßigen Weiterbildungen der Erfindung sind in den abhängigen Ansprüchen angegeben. Es wird darauf hingewiesen, dass in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Das Kupplungselement ist Bestandteil der Fluidkupplung, mittels welcher beispielsweise zwei Fluidleitungen, also eine erste Fluidleitung und eine zweite Fluidleitung, bevorzugt fluiddicht miteinander verbunden werden können. Die Fluidleitungen können dabei grundsätzlich beliebig ausgestaltet sein. Beispielsweise liegen eine oder mehrere der Fluidleitungen jeweils als Schlauchleitung vor. Auch eine Ausgestaltung einer oder mehrerer der Fluidleitungen jeweils als Rohrleitung kann vorgesehen sein. Die Rohrleitung zeichnet sich gegenüber der Schlauchleitung durch ihre starre Ausgestaltung aus, wohingegen die Schlauchleitung flexibel ist. Anders ausgedrückt ist die Schlauchleitung flexibler als die Rohrleitung.

Die Fluidkupplung verfügt zur Herstellung der fluiddichten Verbindung zwischen der ersten Fluidleitung und der zweiten Fluidleitung über das Kupplungselement und das Kupplungsgegenelement. Das Kupplungselement ist beispielsweise der ersten Fluidleitung zugeordnet und strömungstechnisch mit ihr verbindbar oder verbunden. Umgekehrt ist das Kupplungsgegenelement der zweiten Fluidleitung zugeordnet und strömungstechnisch mit ihr verbindbar oder verbunden. Die Verbindung zwischen der Fluidleitung und dem Kupplungselement beziehungsweise dem Kupplungsgegenelement kann grundsätzlich auf beliebige Art und Weise hergestellt werden, beispielsweise durch Verklemmen, Verschrauben, Verschweißen, Verlöten oder dergleichen. Insgesamt ist die Fluidverbindung zwischen den beiden Fluidleitungen über die Fluidkupplung, genauer gesagt über das Kupplungselement und das Kupplungsgegenelement, hergestellt. Hierzu ist die erste Fluidleitung strömungstechnisch an das Kupplungselement und die zweite Fluidleitung an das Kupplungsgegenelement angeschlossen und das Kupplungselement sowie das Kupplungsgegenelement zur Herstellung der Fluidverbindungen miteinander verbunden.

Nach der Kopplung des Kupplungselements mit dem Kupplungsgegenelement ist insoweit die Fluidverbindungen zwischen den beiden Fluidleitungen über das Kupplungselement und das Kupplungsgegenelement hergestellt. Auch bei mit dem Kupplungsgegenelement gekoppeltem Kupplungselement sind vorzugsweise die erste Fluidleitung und die zweite Fluidleitung beabstandet voneinander angeordnet, sodass keine unmittelbare Verbindung, insbesondere keine unmittelbare Fluidverbindung, zwischen ihnen vorliegt. Vielmehr ist die Verbindung beziehungsweise Fluidverbindung ausschließlich über die Fluidkupplung und folglich über das Kupplungselement und das Kupplungsgegenelement realisiert.

Das Kupplungselement verfügt über die Kopplungsmittel, die zur mechanischen Kopplung des Kupplungselements mit dem Kupplungsgegenelement vorgesehen und ausgestaltet sind. Beispielsweise wirken die Kopplungsmittel zum Befestigen des Kupplungselements und des Kupplungsgegenelements aneinander mit Kopplungsgegenmitteln des Kupplungsgegenelements zusammen beziehungsweise sind für ein solches Zusammenwirken vorgesehen und ausgestaltet. Grundsätzlich können die Kopplungsmittel beliebig ausgestaltet sein. Beispielsweise liegen sie in Form von Bajonettkopplungsmitteln vor. Die Kopplungsgegenmittel sind jeweils analog zu den Kopplungsmitteln ausgeführt. Im Falle der Bajonettkopplungsmittel liegen sie folglich als Bajonettkopplungsgegenmittel vor. Die Bajonettkopplungsmittel und die Bajonettkopplungsgegenmittel bilden zusammen einen Bajonettverschluss, mittels welchem das Kupplungselement mit dem Kupplungsgegenelement reversibel koppelbar ist.

Der Dichtring dient zur Abdichtung der Fluidverbindungen zwischen dem Kupplungselement und dem Kupplungsgegenelement. Insbesondere liegt der Dichtring nach dem Koppeln von Kupplungselement und Kupplungsgegenelement aneinander dichtend an dem Kupplungsgegenelement oder einem an dem Kupplungsgegenelement angeordneten weiteren Dichtring an. Der Dichtring und - optional - der weite Dichtring umgreifen jeweils einen Fluidraum, über den die Fluidverbindung verläuft. Der jeweilige Fluidraum ist in radialer Richtung nach außen von dem entsprechenden Dichtring begrenzt. Ein Fluid, mit welchem das Kupplungselement beaufschlagt wird, durchströmt also den von dem Dichtring begrenzte Fluidraum in Richtung des Kupplungsgegenelements. Anschließend tritt es in das Kupplungsgegenelement oder in den von dem weiteren Dichtring begrenzten Fluidraum ein. Auch die umgekehrte Strömungsrichtung kann selbstverständlich vorgesehen sein.

Der Dichtring ist separat von dem Kupplungskörper ausgebildet und liegt materialuneinheitlich zu diesem vor, besteht also aus einem anderen Material als der Kupplungskörper. Vorzugsweise besteht der Dichtring aus einem Dichtungsmaterial, zum Beispiel Acrylnitril-Butadien-Kautschuk (NBR), Ethylen-Propylen-Dien-Kautschuk (EPDM) oder Polytetrafluorethylen (PTFE). Das Kupplungselement und das Kupplungsgegenelement sind bevorzugt - zumindest im Vergleich mit dem Dichtring - starr ausgebildet und bestehen insoweit aus einem Material, welches eine höhere Steifigkeit aufweist als das Material des Dichtrings. Bevorzugt sind das Kupplungselement und des Kupplungsgegenelement aus Metall, beispielsweise aus Messing. Auch eine Realisierung aus Stahl, insbesondere aus Edelstahl, oder aus Kunststoff, beispielsweise Polyamid, kann vorgesehen sein.

Zum Herstellen der dichten Fluidverbindung ist es zum einen notwendig, dass der Dichtring an dem Kupplungsgegenelement beziehungsweise dem weiteren Dichtring fest und durchgehend anliegt. Hierzu wird der Dichtring während des Koppelns des Kupplungselements mit dem Kupplungsgegenelement in axialer Richtung komprimiert. Zum anderen soll der Dichtring drehbar sein, um das Koppeln von Kupplungselement und Kupplungsgegenelement miteinander beziehungsweise das Ineingriffbringen der Kopplungsmittel mit den Kopplungsgegenmitteln zu erleichtern. Das Drehen des Dichtrings wird durch das Komprimieren der Dichtung erschwert.

Aus diesem Grund ist der Dichtring, insbesondere sein Grundkörper, mit Spiel in axialer Richtung in dem Kupplungselement angeordnet, nämlich in der Dichtungsaufnahme, die in dem Kupplungskörper vorliegt. Das bedeutet, dass der Dichtring oder zumindest sein Grundkörper in axialer Richtung bezüglich der Längsmittelachse des Kupplungskörpers beziehungsweise des Kupplungselements innerhalb des Spiels verlagerbar ist. Unter dem Kupplungskörper ist ein Grundkörper des Kupplungselements zu verstehen, welcher der Aufnahme des Dichtrings dient und mit den Kopplungsmitteln verbunden ist, insbesondere starr verbunden. Vorzugsweise gehen die Kopplungsmittel von dem Kupplungskörper aus. Die Dichtungsaufnahme ist in axialer Richtung von der Stützwand begrenzt, insbesondere auf ihrer dem Kupplungsgegenelement abgewandten Seite. Beispielsweise ist die Stützwand von einem Fluidkanal unter Ausbildung einer Mündungsöffnung durchgriffen, der durch die Mündungsöffnung in die Dichtungsaufnahme einmündet.

Um zum einen den Dichtring in axialer Richtung in Richtung des Kupplungsgegenelements zu drängen und somit ein dichtes Anliegen an diesem beziehungsweise dem weiteren Dichtring sicherzustellen, und zum anderen, um ein leichtgängiges Drehen des Dichtrings in Umfangsrichtung bezüglich der Längsmittelachse sicherzustellen, geht von dem Grundkörper die elastische Dichtlippe aus. Das bedeutet, dass sich die Dichtlippe ausgehend von dem Grundkörper in axialer Richtung erstreckt. Sie ist - vorzugsweise auch in entspanntem Zustand des Dichtrings - in radialer Richtung nach innen geneigt, also ausgehend von dem Grundkörper zumindest bereichsweise bezüglich der Längsmittelachse angewinkelt und/oder gekrümmt. In jedem Fall verläuft die Dichtlippe zum einen ausgehend von dem Grundkörper in axialer Richtung von dem Grundkörper fort und auf die Stützwand zu und zum anderen verläuft sie in radialer Richtung nach innen.

Beispielsweise verfügt der Dichtring lediglich über die eine Dichtlippe, die auf einer Seite von dem Grundkörper ausgeht. Es kann jedoch auch vorgesehen sein, dass zusätzlich zu der Dichtlippe wenigstens eine weitere Dichtlippe vorliegt, die analog zu der Dichtlippe ausgestaltet ist und entsprechend von dem Grundkörper ausgeht und sich in axialer Richtung von diesem fort erstreckt. Insgesamt liegen insoweit eine oder mehrere Dichtlippen vor, wobei jede der Dichtlippen vorzugsweise gemäß den Ausführungen im Rahmen dieser Beschreibung ausgestaltet ist. Die Dichtlippen können hierbei identisch oder voneinander verschieden sein.

Die Dichtlippe liegt zumindest zeitweise an der Stützwand an, sodass sich der Dichtring beziehungsweise sein Grundkörper über die Dichtlippe an ihr abstützt. Aufgrund der elastischen Ausgestaltung der Dichtlippe ist sie in radialer Richtung auslenkbar. Bevorzugt liegt die Dichtlippe zudem gleitend an der Stützwand an. Wird der Grundkörper ausgehend von einer Ausgangsstellung auf die Stützwand zu gedrängt, beispielsweise aufgrund des Koppelns des Kupplungselements mit dem Kupplungsgegenelement, so wird die Dichtlippe zwischen dem Grundkörper des Dichtrings und der Stützwand komprimiert und weicht hierbei in radialer Richtung nach innen aus. Hierbei gleitet die Dichtlippe auf der Stützwand in radialer Richtung nach innen. Bei einer Verlagerung des Dichtrings in axialer Richtung auf die Stützwand zu ergibt sich somit eine radiale Auslenkung der Dichtlippe nach innen auf ihrer dem Grundkörper abgewandten und der Stützwand zugewandten Seite und somit eine elastische Verformung der Dichtlippe.

Aufgrund der elastischen Verformung bewirkt die Dichtlippe eine Federkraft auf den Grundkörper, welche diesen von der Stützwand fort drängt. Wird also das Kupplungselement von dem Kupplungsgegenelement gelöst, so wird der Dichtring zur Verlagerung in axialer Richtung in die von der Stützwand abgewandte Richtung innerhalb des Spiels freigegeben und von der von der Dichtlippe bewirkten Federkraft in axialer Richtung von der Stützwand fortgedrängt, insbesondere bis in seine Ausgangsstellung. Hierbei erfolgt eine Verlagerung der Dichtlippe in radialer Richtung nach außen. Anders ausgedrückt ergibt sich bei einer Verlagerung des Grundkörpers in axialer Richtung von der Stützwand fort eine radiale Auslenkung der Dichtlippe nach außen, wobei sie wiederum auf der Stützwand gleitet.

Insgesamt wird durch die beschriebene Ausgestaltung des Kupplungselements und des Dichtrings zum einen der Vorgang des Koppelns des Kupplungselements mit dem Kupplungsgegenelement aufgrund der guten Drehbarkeit des Dichtrings vereinfacht. Hierbei liegt vorzugsweise zumindest näherungsweise lediglich ein Linienkontakt zwischen der Dichtlippe und der Stützwand vor. Zum anderen wird eine zuverlässig dichte Fluidverbindung zwischen dem Kupplungselement und dem Kupplungsgegenelement hergestellt. Die Dichtlippe weist hierbei auf ihrer dem Grundkörper abgewandten Seite eine kleinere Fläche auf als der Grundkörper auf seiner der Stützwand zugewandten Seite. Folglich wird die Auflagefläche des Dichtrings an der Stützwand verkleinert und die gute Drehbarkeit des Dichtrings in dem Kupplungselement erzielt.

Eine Weiterbildung der Erfindung sieht vor, dass der Dichtring, insbesondere der Grundkörper und/oder die Dichtlippe, in axialer Richtung durchgehend einen zur Durchströmung mit Fluid vorgesehenen und ausgestalteten Fluidraum in radialer Richtung nach außen begrenzen. Der Dichtring grenzt also unmittelbar an den Fluidraum an, in welchem zumindest zeitweise das Fluid vorliegt beziehungsweise durch welchen zumindest zeitweise das Fluid zwischen dem Kupplungselement und dem Kupplungsgegenelement strömt. Der Dichtring liegt in radialer Richtung außenseitig an einer Innenwand des Kupplungskörpers an und ist in radialer Richtung innenseitig zumindest zeitweise mit dem Fluid beaufschlagt, welches die Dichtung in radialer Richtung nach außen an die Innenwand drängt. Dies gilt vorzugsweise sowohl für den Grundkörper als auch insbesondere für die Dichtlippe.

Die Dichtlippe hat also nicht bloß die Funktion, den Grundkörper in elastischer Weise in axialer Richtung verlagerbar anzuordnen, sondern sie dient auch der Abdichtung des Fluidraums gegenüber einer Außenumgebung des Kupplungselements. Hierzu wird die Dichtlippe von dem Fluid in radialer Richtung nach außen an die Innenwand gedrängt und liegt somit dichtend an dieser an. Zusätzlich kann das Fluid die Dichtlippe in axialer Richtung an die Stützwand drängen, sodass sie zum einen an der Innenwand und zum anderen an der Stützwand dichtend anliegt. Hierdurch wird eine besonders gute Dichtwirkung des Dichtrings erzielt, da ein Eindringen des Fluids zwischen den Dichtring und den Kupplungskörper, insbesondere dessen Innenwand, zuverlässig verhindert wird.

Die Dichtlippe weist auf ihrer dem Grundkörper abgewandten Seite das freie Ende auf. Das freie Ende weist die Stirnseite auf, mit welcher die Dichtlippe zumindest zeitweise an der Stützwand anliegt. Die Stirnseite des freien Endes ist vorzugsweise durchgehend gekrümmt, ist also im Längsschnitt gesehen kreisabschnittsförmig beziehungsweise teilkreisförmig. Eine die Dichtlippe in radialer Richtung nach innen begrenzende Dichtlippeninnenwand und eine die Dichtlippe in radialer Richtung nach außen begrenzende Dichtlippenaußenwand treffen sich auf der Stirnseite beziehungsweise gehen über diese ineinander über. Sowohl die Dichtlippeninnenwand als auch die Dichtlippenaußenwand sind durchgehend gekrümmt und gehen auf der Stirnseite des freien Endes beziehungsweise über die Stirnseite stetig, also sprungfrei, ineinander über. Hierdurch wird ein reibungsarmes Anliegen der Dichtlippe an der Stützwand und folglich die gute Drehbarkeit des Dichtrings erzielt.

Eine Weiterbildung der Erfindung sieht vor, dass die Dichtungsaufnahme in radialer Richtung größere Abmessungen aufweist als ein in einem Fluidanschluss des Kupplungselements ausgebildeter Fluidkanal, der in die Dichtungsaufnahme einmündet, und/oder dass der von dem Dichtring begrenzte Fluidraum in radialer Richtung größere Abmessungen aufweist als der Fluidkanal. Die Dichtungsaufnahme wird in radialer Richtung nach außen von der Innenwand begrenzt und in axialer Richtung einerseits von der Stützwand des Kupplungselements und andererseits von einer Mündungsöffnung, über welche sie in eine Außenumgebung des Kupplungselements übergeht. In der Dichtungsaufnahme ist der Dichtring angeordnet. Der Dichtring stützt sich zumindest zeitweise in radialer Richtung nach außen an der Innenwand ab. Er begrenzt zudem den Fluidraum, durch welchen die Fluidverbindungen hergestellt ist, in radialer Richtung nach außen.

In die Dichtungsaufnahme beziehungsweise in den Fluidraum mündet der Fluidkanal ein, nämlich in axialer Richtung. Der Fluidkanal durchgreift hierbei vorzugsweise die Stützwand unter Ausbildung der bereits erwähnten Mündungsöffnung. Um eine Beeinflussung einer Strömung des Fluids durch das Kupplungselement zu verringern oder sogar gänzlich zu vermeiden, sind die Abmessungen in radialer Richtung mindestens der Dichtungsaufnahme derart gewählt, dass sie größer sind als die Abmessungen des Fluidkanals in derselben Richtung, zumindest auf dessen der Dichtungsaufnahme zugewandten Seite. Es kann vorgesehen sein, dass sich die radialen Abmessungen des Fluidkanals in die von der Dichtungsaufnahme abgewandte Richtung verändern, beispielsweise ausgehend von der Dichtungsaufnahme. Die radialen Abmessungen des Fluidkanals können so zum Beispiel größer werden. Beispielsweise entsprechend die radialen Abmessungen des Fluidkanals auf seiner der Dichtungsaufnahme zugewandten Seite radialen Abmessungen der Dichtungsaufnahme oder sind sogar größer als diese. Bevorzugt sind die Abmessungen sowohl der Dichtungsaufnahme als auch des Dichtrings derart gewählt, dass bereits der von dem Dichtring begrenzte Fluidraum über seine gesamte Erstreckung in axialer Richtung hinweg in der radialen Richtung größere Abmessungen aufweist als der Fluidkanal, insbesondere auf seiner der Dichtungsaufnahme und/oder unmittelbar an sie angrenzenden Seite. Mit einer solchen Ausgestaltung des Kupplungselements wird eine verlustarme Durchströmung des Kupplungselements beziehungsweise der Fluidkupplung erzielt.

Eine Weiterbildung der Erfindung sieht vor, dass die Stützwand unmittelbar oder über eine Fase oder eine Rundung in eine die Dichtungsaufnahme in radialer Richtung nach außen begrenzende Innenwand übergeht und/oder sich in radialer Richtung nach innen bis hin zu einer den Fluidkanal in radialer Richtung nach außen begrenzenden Fluidkanalwand erstreckt oder über eine Fase oder eine Rundung in diese übergeht. Die Stützwand erstreckt sich also in radialer Richtung nach außen bis hin zu der Innenwand oder zumindest bis zu der Fase oder der Rundung, über welche sie an die Innenwand im Längsschnitt gesehen angebunden ist. Vorzugsweise verläuft die Innenwand im Längsschnitt gesehen auf ihrer der Stützwand zugewandten Seite durchgehend gerade, nämlich bis hin zu der Stützwand oder der Fase beziehungsweise der Rundung. Insoweit grenzt die Stützwand entweder unmittelbar an die Innenwand an oder zwischen ihnen liegt im Längsschnitt gesehen ausschließlich die Fase beziehungsweise Rundung vor.

Zusätzlich oder alternativ erstreckt sich die Stützwand in radialer Richtung nach innen bis hin zu der Fluidkanalwand oder der Fase beziehungsweise der Rundung, über welche sie an die Fluidkanalwand angebunden ist. Vorzugsweise verläuft die Fluidkanalwand auf ihrer der Stützwand zugewandten Seite im Längsschnitt gesehen gerade, nämlich bis hin zu der Fase beziehungsweise der Rundung. Die Stützwand grenzt entweder unmittelbar an die Fluidkanalwand an oder ist ausschließlich über die Fase beziehungsweise die Rundung an sie angebunden. Vorzugsweise ist die Stützwand ringförmig, insbesondere kreisringförmig. Somit wird eine hinreichend große Fläche für das Anliegen der Dichtlippe an der Stützwand geschaffen.

Eine Weiterbildung der Erfindung sieht vor, dass das die Stützwand durchgehend plan und/oder angewinkelt zu der Längsmittelachse ausgerichtet ist. Die plane Ausgestaltung der Stützwand hat den Vorteil, dass die Dichtlippe problemlos auf ihr gleiten kann, sodass eine einfache Verlagerung des Dichtrings sowohl in Umfangsrichtung als auch in axialer Richtung sichergestellt ist. Die Stützwand beziehungsweise eine die Stützwand im Längsschnitt gesehen durchgehend aufnehmende Gerade sind bezüglich der Längsmittelachse angewinkelt, schließen mit ihr also einen Winkel ein, der größer als 0° und kleiner als 180° ist. Beispielsweise steht die Stützwand senkrecht auf der Längsmittelachse beziehungsweise zu einer parallel zu der Längsmittelachse vorliegenden geraden. Es kann jedoch auch vorgesehen sein, dass die Stützwand in die von der Innenwand abgewandte Richtung abfällt, also in axialer Richtung in die von dem Fluidraum abgewandte Richtung geneigt ist. Hierdurch wird das Gleiten der Dichtlippe in radialer Richtung nach innen erleichtert. In diesem Fall ist die Stützwand konisch ausgestaltet.

Die Erfindung sieht vor, dass der Dichtring auf seiner in radialer Richtung außen liegenden Seite eine Formschlusseinrichtung aufweist, die mit einer Formschlussgegeneinrichtung des Kupplungskörpers in Formschlusseingriff steht, um den Grundkörper mit Spiel in axialer Richtung in der Dichtungsaufnahme zu halten. In anderen Worten wirken die Formschlusseinrichtungen und die Formschlussgegeneinrichtung formschlüssig zusammen, um den Dichtring beziehungsweise seinen Grundkörper mit Spiel in axialer Richtung bezüglich des Kupplungskörpers festzusetzen. Hierdurch wird sowohl ein unbeabsichtigtes Herausgelangen des Dichtrings aus der Dichtungsaufnahme verhindert als auch ein übermäßiges Komprimieren der Dichtlippe. Die Formschlusseinrichtung und die Formschlussgegeneinrichtung sind bevorzugt derart ausgestaltet, dass der Dichtring zwischen zwei Endanschlägen verlagerbar ist, welche von der Formschlusseinrichtung oder der Formschlussgegeneinrichtung gebildet sind. Hierdurch werden die bereits genannten Vorteile erzielt.

Die Erfindung sieht vor, dass die Formschlusseinrichtung als Formschlussaufnahme oder als Formschlussvorsprung und die Formschlussgegeneinrichtung als Formschlussvorsprung oder als Formschlussaufnahme ausgestaltet ist. Eine Weiterbildung der Erfindung sieht vor, dass die Formschlussaufnahme in axialer Richtung Abmessungen aufweist, die um einen Faktor von mindestens 1,25, mindestens 1,5, mindestens 1,75 oder mindestens 2,0 größer sind als Abmessungen des Formschlussvorsprungs in derselben Richtung. In einer ersten Variante ist also die Formschlusseinrichtung als Formschlussaufnahme und die Formschlussgegeneinrichtung als Formschlussvorsprung und in einer zweiten Variante die Formschlusseinrichtung als Formschlussvorsprung und die Formschlussgegeneinrichtung als Formschlussaufnahme ausgebildet. In jedem Fall greift der Formschlussvorsprung formschlüssig in die Formschlussaufnahme ein, um den Dichtring beziehungsweise seinen Grundkörper mit Spiel in der Dichtungsaufnahme zu halten. Um das Spiel zu realisieren, ist die Formschlussaufnahme in axialer Richtung größer als der Formschlussvorsprung, nämlich um mindestens einen der genannten Faktoren. Eine solche Ausgestaltung des Kupplungselement ist einfach und kostengünstig herstellbar und erzielt zugleich die beschriebenen Vorteile.

Eine Weiterbildung der Erfindung sieht vor, dass der Formschlussvorsprung in axialer Richtung gesehen auf gegenüberliegenden Seiten von Formschlussflächen begrenzt ist, die gegeneinander angewinkelt sind. Anders ausgedrückt weisen die Formschlussflächen unterschiedliche Winkel bezüglich der Längsmittelachse beziehungsweise einer zu dieser parallelen Geraden auf. Die Neigung der Formschlussflächen ist beispielsweise derart gewählt, dass eine Verlagerung des Dichtrings auf die Stützwand zugelassen, eine Verlagerung von der Stützwand fort jedoch unterbunden wird. Hierdurch wird eine gute Komprimierbarkeit des Dichtrings in axialer Richtung sichergestellt und zugleich das unbeabsichtigtes Herausgelangen des Dichtrings aus der Dichtungsaufnahme unterbunden.

Eine Weiterbildung der Erfindung sieht vor, dass sich die Dichtungsaufnahme in die von dem Fluidkanal abgewandte Richtung aufweistet, beispielsweise über eine Fase. Die Aufweitung erfolgt bevorzugt auf einer dem Fluidkanal abgewandten Seite der Formschlussgegeneinrichtung. Beispielsweise geht die Formschlussgegeneinrichtung von einer die Dichtungsaufnahme in radialer Richtung nach außen begrenzenden Innenwand aus und ragt ausgehend von dieser in radialer Richtung nach innen, also in Richtung des Dichtrings. Die Innenwand ist derart ausgestaltet, dass die Dichtungsaufnahme auf gegenüberliegenden Seiten der Formschlussgegeneinrichtung unterschiedliche Innenabmessungen aufweist. Insbesondere sind die Innenabmessungen der Dichtungsaufnahme auf der dem Fluidkanal zugewandten Seite der Formschlussgegeneinrichtung kleiner als auf der dem Fluidkanal abgewandten Seite der Formschlussgegeneinrichtung.

Bevorzugt weitet sich die Dichtungsaufnahme auf der dem Fluidkanal abgewandten Seite der Formschlussgegeneinrichtung auf, insbesondere ausgehend von dieser. Das Aufweiten erfolgt hierbei in die von dem Fluidkanal abgewandte Richtung. Beispielweise weitet sich die Dichtungsaufnahme um wenigstens 5 %, wenigstens 7,5 % oder wenigstens 10 % auf. In demjemigen Bereich, in welchem sich die Dichtungsaufnahme aufweitet, ist die sie begrenzende Innenwand aufgrund der Fase vorzugsweise konisch, weist also einen konischen Bereich auf. Besonders bevorzugt schließt sich an den konischen Bereich auf der Formschlussgegeneinrichtung abgewandten Seite des konischen Bereichs ein zylindrischer Bereich der Innenwand an, in welchem die Innenabmessungen der Dichtungsaufnahme konstant sind.

Eine Weiterbildung der Erfindung sieht vor, dass eine Mündungsöffnung der Dichtungsaufnahme, über welche sie in die Außenumgebung einmündet, von einem Bund begrenzt ist. Die Mündungsöffnung ist von derjenigen Mündungsöffnung beabstandet angeordnet, über welche der Fluidkanal in die Dichtungsaufnahme einmündet, insbesondere ist sie parallel zu ihr beabstandet. Um die Mündungsöffnung herum erstreckt sich der Bund. Dieser fasst die Mündungsöffnung in Umfangsrichtung vollständig und durchgehend ein. Der Bund liegt in Gestalt eines Rings vor, der bevorzugt in radialer Richtung kleiner ist als der Kupplungskörper, jedoch von diesem ausgeht, insbesondere materialeinheitlich und einstückig mit ihm ausgestaltet ist. Der Bund bildet hierbei vorzugsweise eine Aufwölbung aus, die in axialer Richtung über den Kupplungskörper übersteht. Mit Hilfe des Bunds wird die Festigkeit des Kupplungselements bei gleichzeitig verringertem Materialeinsatz erhöht.

Eine Weiterbildung der Erfindung sieht vor, dass die Dichtlippe durch einen Rücksprung des Dichtrings gebildet ist, wobei der Grundkörper angrenzend an die Dichtlippe eine Materialstärke aufweist, die um einen Faktor von mindestens 2,0, mindestens 2,5 oder mindestens 3,0 größer ist als eine Materialstärke der Dichtlippe, welche diese an den Grundkörper angrenzend aufweist. Unter dem Rücksprung ist zu verstehen, dass sich die Materialstärke des Dichtrings sprungartig verändert. Durch die Ausbildung des Rücksprung weist insoweit bevorzugt der Dichtring beziehungsweise dessen Grundkörper eine Stirnfläche auf, welche bezüglich der Längsmittelachse beziehungsweise einer zu dieser parallelen Geraden angewinkelt ist, insbesondere mit ihr einen Winkel von mindestens 75° und höchstens 105°, mindestens 80° und höchstens 100°, mindestens 85° und höchstens für 90° oder in etwa oder genau 90° einschließt.

Über die Stirnfläche steht die Dichtlippe in axialer Richtung über und erstreckt sich in die von dem Grundkörper abgewandte Richtung. Aufgrund des Rücksprungs ergibt sich ein deutlicher Unterschied zwischen der Materialstärke des Grundkörpers und der Materialstärke der Dichtlippe auf aneinander angrenzenden Seiten. So beträgt die Materialstärke der Dichtlippe auf auf ihrer unmittelbar an den Grundkörper angrenzenden Seite höchstens 35 %, höchstens 30 %, höchstens 25 % oder höchstens 20 % der Materialstärke des Grundkörpers auf seiner unmittelbar an die Dichtlippe angrenzenden Seite. Hierdurch wird eine hohe Flexibilität der Dichtlippe erzielt. Unter der Materialstärke ist insbesondere eine Erstreckung des jeweiligen Elements in radialer Richtung zu verstehen.

Eine Weiterbildung der Erfindung sieht vor, dass im Längsschnitt gesehen die Materialstärke der Dichtlippe ausgehend von ihrer dem Grundkörper zugewandten Seite in die dem Grundkörper abgewandte Richtung zumindest abschnittsweise, insbesondere durchgehend, abnimmt. Anders ausgedrückt verjüngt sich die Dichtlippe in die von dem Grundkörper abgewandte Seite, bevorzugt durchgehend und/oder stetig. Dies dient dem Erzielen einer leichten Drehbarkeit und einer hohen Flexibilität sowohl in axialer als auch in radialer Richtung.

Eine Weiterbildung der Erfindung sieht vor, dass die Dichtlippe auf ihrer dem Grundkörper abgewandten Seite eine Materialstärke aufweist, die höchstens 40 %, höchstens 30 % oder höchstens 20 % der Materialstärke der Dichtlippe angrenzend an den Grundkörper entspricht. Die Dichtlippe verjüngt sich insoweit in die von dem Grundkörper abgewandte Richtung deutlich, sodass ihre Materialstärke entsprechend abnimmt. Die Materialstärke der Dichtlippe an ihren freien Ende beziehungsweise ihrer Stirnseite beträgt bevorzugt höchstens einen der genannten Werte. Besonders bevorzugt ist die Materialstärke der Dichtlippe an ihrem freien Ende jedoch noch kleiner, vorzugsweise beträgt sie höchstens 10 % oder höchstens 5 % der Materialstärke der Dichtlippe unmittelbar angrenzend an den Grundkörper. Wiederum dient dies der Realisierung einer leichtgängigen Drehbarkeit.

Eine Weiterbildung der Erfindung sieht vor, dass die Dichtlippe im Längsschnitt gesehen in radialer Richtung außen von einer Dichtlippenaußenwand und in radialer Richtung innen von einer Dichtlippeninnenwand begrenzt ist, wobei die Dichtlippenaußenwand und die Dichtlippeninnenwand jeweils zumindest abschnittsweise, insbesondere durchgehend, gleichsinnig gekrümmt sind. Die Dichtlippenaußenwand und Dichtlippeninnenwand laufen im Längsschnitt gesehen in die von dem Grundkörper abgewandte Richtung aufeinander zu, bis sie an dem freien Ende beziehungsweise der Stirnseite der Dichtlippe oder über diese ineinander übergehen. Die Dichtlippenaußenwand und Dichtlippeninnenwand sind also über die Stirnseite beziehungsweise eine die Stirnseite ausbildende Stirnseitenwand aneinander angebunden.

Die Dichtlippenaußenwand ist zumindest abschnittsweise, vorzugsweise jedoch durchgehend gekrümmt. Dies gilt ebenso für die Dichtlippeninnenwand. Die Krümmungen der Dichtlippenaußenwand und der Dichtlippeninnenwand sind derart gewählt, dass die Dichtlippe in radialer Richtung nach innen geneigt beziehungsweise gekrümmt ist und gleichzeitig der Abstand in radialer Richtung zwischen der Dichtlippenaußenwand und der Dichtlippeninnenwand in die von dem Grundkörper abgewandte Richtung abnimmt. Dies wird durch die gleichsinnige Krümmung der Dichtlippenaußenwand und der Dichtlippeninnenwand erzielt. Hierunter ist zu verstehen, dass sowohl die Dichtlippenaußenwand als auch die Dichtlippeninnenwand jeweils in axialer Richtung gesehen zumindest abschnittsweise oder sogar durchgehend in radialer Richtung nach innen gekrümmt sind, also mit zunehmender Entfernung von dem Grundkörper in axialer Richtung weiter in radialer Richtung nach innen ragen. Die Krümmungsradien von Dichtlippenaußenwand und der Dichtlippeninnenwand sind unterschiedlich gewählt, sodass ihr Abstand voneinander mit zunehmendem Abstand von dem Grundkörper abnimmt. Hierdurch wird eine hohe Flexibilität der Dichtlippe und eine leichte Drehbarkeit erzielt.

Eine Weiterbildung der Erfindung sieht vor, dass die Dichtlippe in einer ersten axialen Stellung des Dichtrings an einer ersten Ringfläche der Stützwand und in einer von der ersten axialen Stellung verschiedenen zweiten axialen Stellung an einer zweiten Ringfläche der Stützwand anliegt, wobei die zweite Ringfläche in radialer Richtung weiter innen liegt als die erste Ringfläche. In der ersten axialen Stellung ist der Grundkörper des Dichtrings weiter von der Stützwand entfernt als in der zweiten Stellung. Wird der Dichtring in axialer Richtung auf die Stützwand zu verlagert, so weicht die Dichtlippe in radialer Richtung nach innen aus beziehungsweise wird in radialer Richtung nach innen elastisch ausgelenkt. Folglich liegt sie in der ersten Stellung an der weiter außen liegenden ersten Ringfläche und in der zweiten Stellung an der weiter innen liegenden zweiten Ringfläche an, insbesondere in Umfangsrichtung durchgehend, wobei die erste Ringfläche und die zweite Ringfläche jeweils eine Teilfläche der Stützwand sind. Hierdurch wird die Leichtgängigkeit des Dichtrings in Umfangsrichtung und die hohe Federwirkung der Dichtlippe erzielt.

Eine Weiterbildung der Erfindung sieht vor, dass die Dichtlippe zumindest zeitweise eine Federkraft bewirkt, die den Dichtring in Richtung der ersten axialen Stellung drängt. Hierauf wurde bereits hingewiesen. Die erste Axialstellung ist beispielsweise bereits erwähnte Ausgangsstellung. Die Federkraft wird zum einen durch das Auslenken der Dichtlippe in radialer Richtung nach innen bewirkt. Zum anderen wird sie durch ein aus dem Auslenken in radialer Richtung resultierendes Komprimieren der Dichtlippe in Umfangsrichtung erzielt. Wird also der Dichtring beziehungsweise sein Grundkörper auf die Stützwand zu verlagert, so wird zuverlässig die Federkraft erzeugt, die den Dichtring von der Stützwand fortdrängt, insbesondere bis in die erste Stellung beziehungsweise die Ausgangsstellung.

Die Erfindung sieht vor, dass das Spiel in axialer Richtung derart gewählt ist, dass die Dichtlippe in jeder Stellung des Dichtrings an der Stützwand anliegt und vorgespannt ist. Die Verlagerbarkeit des Dichtrings beziehungsweise des Grundkörpers ist durch das Zusammenwirken der Formschlusseinrichtungen der Formschlussgegeneinrichtung begrenzt. Innerhalb des hieraus resultierenden Spiels soll das Kupplungselement derart beschaffen sein, dass die Dichtlippe stets die Federkraft bewirkt, also stets an der Stützwand anliegt und in radialer Richtung nach innen ausgelenkt ist. Hierdurch wird eine besonders hohe Dichtwirkung erzielt.

Eine Weiterbildung der Erfindung sieht vor, dass im Längsschnitt gesehen das freie Ende der Dichtlippe bei vollständig entspanntem Dichtring und/oder in einer der Stellungen in radialer Richtung gesehen von einer den Dichtring an einer am weitesten innen liegenden Stelle schneidenden gedachten ersten Geraden einen größeren Abstand aufweist als von einer den Dichtring an einer am weitesten außen schneidenden gedachten zweiten Geraden. Die erste Gerade und die zweite Gerade verlaufen parallel zueinander und parallel zu der Längsmittelachse. Die erste Gerade schmiegt sich in radialer Richtung von innen und die zweite Gerade in radialer Richtung von außen an den Dichtring an. Folglich ist der Dichtring im Längsschnitt gesehen vollständig zwischen der ersten Geraden und der zweiten Geraden aufgenommen und steht nicht über diese über.

Das freie Ende der Dichtlippe liegt bei vollständig entspanntem Dichtring beziehungsweise in einer der Stellungen in radialer Richtung näher an der zweiten Geraden als an der ersten Geraden. Vorzugsweise verringert sich der Abstand zwischen dem freien Ende und der ersten Geraden mit abnehmendem Abstand des Grundkörpers zu der Stützwand. Je weiter also der Grundkörper auf die Stützwand zubewegt wird, umso weiter wird die Dichtlippe in radialer Richtung nach innen ausgelenkt, sodass ihr Abstand zu der ersten Geraden abnimmt und ihr Abstand zu der zweiten Geraden zunimmt. Eine solche Ausgestaltung stellt eine hohe Dichtheit des Kupplungselements bei gleichzeitig guter Drehbarkeit sicher.

Eine Weiterbildung der Erfindung sieht vor, dass im Längsschnitt gesehen der Abstand des freien Endes von der ersten Geraden um einen Faktor von mindestens 1,7, mindestens 2,0 oder mindestens 2,25 größer ist als ein Abstand von der zweiten Geraden. Dies gilt insbesondere bei vollständig entspanntem Dichtring, in der ersten Stellung oder in der zweiten Stellung. Hinsichtlich der Vorteile wird auf die vorstehenden Ausführungen verwiesen.

Eine Weiterbildung der Erfindung sieht vor, dass der Dichtring auf seiner der Dichtlippe in axialer Richtung abgewandten Seite einen Dichtwulst aufweist, der in radialer Richtung nach innen geneigt ist und/oder eine Materialstärke aufweist, die um einen Faktor von mindestens 2,0, mindestens 2,5 oder mindestens 3,0 größer ist als die größte Materialstärke der Dichtlippe über ihre Erstreckung hinweg. Der Dichtwulst liegt nach dem Koppeln des Kupplungselements mit dem Kupplungsgegenelement an dem Kupplungsgegenelement beziehungsweise dem weiteren Dichtring dichtend an. Der Dichtring kann derart ausgestaltet sein, dass der Dichtwulst während des Koppelns in radialer Richtung nach innen elastisch ausgelenkt wird. In jedem Fall ist er ausgehend von dem Grundkörper in radialer Richtung nach innen geneigt. Er weist jedoch bevorzugt eine deutlich größere Materialstärke auf als die Dichtlippe. Insbesondere ist seine Materialstärke durchgehend um einen der genannten Faktoren größer als die größte Materialstärke der Dichtlippe über ihre gesamte Erstreckung in axialer Richtung hinweg. Erneut wird hierdurch eine gute Dichtheit des Kupplungselements bei gleichzeitig leichtgängiger Drehbarkeit des Dichtrings erzielt.

Eine Weiterbildung der Erfindung sieht vor, dass der Dichtwulst auf seiner der Dichtlippe abgewandten Seite einen Radius aufweist, der größer ist als ein Radius der Dichtlippe auf ihrer dem Dichtwulst abgewandten Seite, insbesondere um einen Faktor von mindestens 6, mindestens 8 oder mindestens 10. Anders ausgedrückt weisen der Dichtwulst und die Dichtlippe jeweils eine Krümmung mit einem Radius auf. Die Krümmung der Dichtlippe liegt insbesondere auf der Stirnseite beziehungsweise an dem freien Ende der Dichtlippe vor. Aufgrund der größeren Materialstärke des Dichtwulsts ist auch sein Radius deutlich größer als der Radius der Dichtlippe, nämlich um mindestens eine der genannten Faktoren. Hierdurch werden die bereits genannten Vorteile auf einfache Art und Weise erzielt.

Die Erfindung betrifft weiterhin eine Fluidkupplung gemäß Anspruch 12.

Auf die Vorteile einer derartigen Ausgestaltung der Fluidkupplung beziehungsweise des Kupplungselements wurde bereits hingewiesen. Sowohl die Fluidkupplung als auch das Kupplungselement können gemäß den Ausführungen im Rahmen dieser Beschreibung weitergebildet sein, sodass insoweit auf diese verwiesen wird.

Eine Weiterbildung der Erfindung sieht vor, dass das Kupplungsgegenelement über Kopplungsgegenmittel zum reversiblen Koppeln des Kupplungsgegenelements mit dem Kupplungselement der Fluidkupplung verfügt, wobei der Dichtring ein erster Dichtring mehrerer identischer Dichtringe ist und ein zweiter der Dichtringe in einem Kupplungskörper des Kupplungsgegenelements drehbar angeordnet ist. Vorzugsweise ist also das Kupplungsgegenelement analog zu dem Kupplungselement ausgestaltet, wobei das Kupplungselement über die Kopplungsmittel und das Kupplungsgegenelement über die Kopplungsgegenmittel verfügt. Die Ausführungen hinsichtlich des Kupplungselements sind soweit technisch sinnvoll auf das Kupplungsgegenelement übertragbar. Insgesamt ergibt sich somit eine Fluidkupplung, welche sich durch hohe Dichtheit und einfache Bedienbarkeit auszeichnet.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung eines Kupplungselements für eine Fluidkupplung,
- Figur 2: eine schematische Längsschnittdarstellung des Kupplungselements sowie eines Kupplungsgegenelements der Fluidkupplung,
- Figur 3: eine schematische Längsschnittdarstellung eines Dichtrings und eines Kupplungskörpers des Kupplungselements, wobei der Dichtring in einer ersten Stellung vorliegt,
- Figur 4: eine schematische Längsschnittdarstellung des Dichtrings und des Kupplungskörpers, wobei der Dichtring in einer zweiten Stellung angeordnet ist, sowie
- Figur 5: eine schematische Längsschnittdarstellung des Dichtrings und des Kupplungskörpers, wobei der Dichtring von einem Fluid druckbeaufschlagt ist.

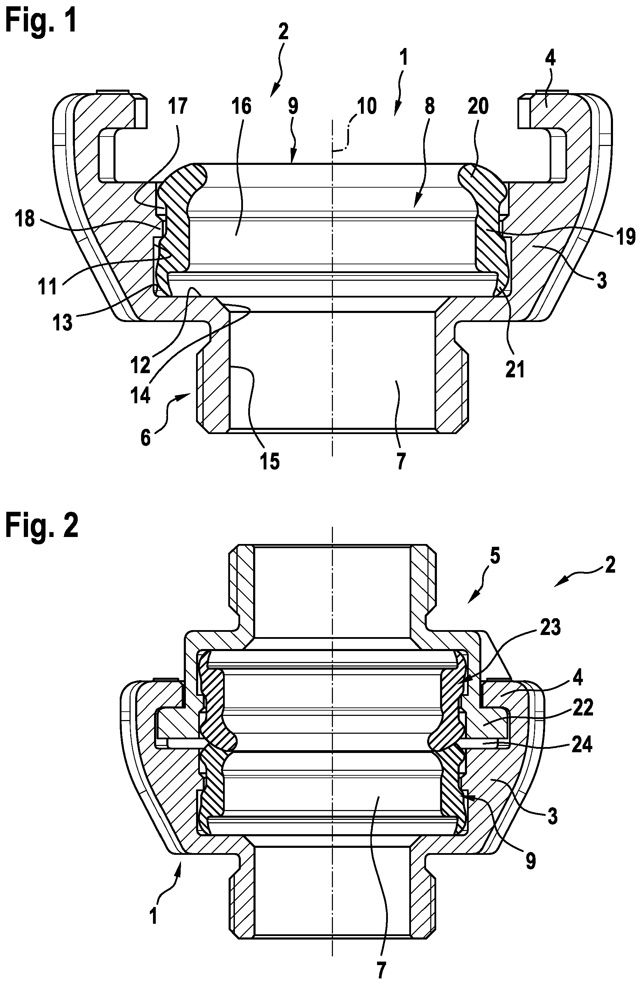

Die Figur 1 zeigt eine Längsschnittdarstellung durch ein Kupplungselement 1 für eine Fluidkupplung 2 beziehungsweise der Fluidkupplung 2. Das Kupplungselement 1 weist einen Kupplungskörper 3 auf, von welchem Kopplungsmittel 4 zum Koppeln des Kupplungselements 1 mit einem Kupplungsgegenelement 5 (hier nicht dargestellt) ausgehen. An dem Kupplungskörper 3 ist ein Fluidanschluss 6 zum Anschließen einer Fluidleitung vorgesehen und ausgestaltet. In dem hier dargestellten Ausführungsbeispiel verfügt der Fluidanschluss 6 über ein Außengewinde, über welches die Fluidleitung mit dem Kupplungselement 1 beziehungsweise seinen Kupplungskörper 3 verbindbar ist.

Weiterhin ist in dem Kupplungskörper 3 ein Fluidkanal 7 ausgestaltet, welcher Bestandteil des Fluidanschlusses 6 ist. Bei an dem Kupplungselement 1 befestigter Fluidleitung steht diese in Strömungsverbindung mit dem Fluidkanal 7. Der Fluidkanal 7 mündet in dem Kupplungskörper 3 in eine Dichtungsaufnahme 8 ein, in welcher ein Dichtring 9 angeordnet ist. Die Dichtungsaufnahme 8 ist in radialer Richtung bezüglich einer Längsmittelachse 10 des Kupplungskörpers 3 von einer Innenwand 11 begrenzt. In axialer Richtung ist die Dichtungsaufnahme 8 auf ihrer dem Fluidkanal 7 zugewandten Seite von einer Stützwand 12 begrenzt. Die Stützwand 12 geht auf ihrer in radialer Richtung außen liegenden Seite über eine Rundung 13 in die Innenwand 11 über.

Auf ihrer in radialer Richtung innen liegenden Seite geht die Stützwand 12 über eine Fase 14 in eine Fluidkanalwand 15 über, die den Fluidkanal 7 in radialer Richtung nach außen begrenzt. In dem hier dargestellten Ausführungsbeispiel ist die Stützwand 12 plan ausgestaltet und liegt insoweit als Ringfläche vor, welche senkrecht auf der Längsmittelachse 10 beziehungsweise einer zu dieser parallelen Geraden angeordnet ist. Sie kann jedoch auch bezüglich der Längsmittelachse beziehungsweise der Geraden angewinkelt sein, vorzugsweise ist sie hierbei nach innen geneigt. In diesem Fall ist die Stützwand 12 konisch.

Der Dichtring 9 liegt auf seiner in radialer Richtung außen liegenden Seite zumindest zeitweise und zumindest bereichsweise an der Innenwand 11 an. Auf seiner in radialer Richtung innen liegenden Seite begrenzt er einen Fluidraum 16, der mit dem Fluidkanal 7 in Strömungsverbindung steht. Über den Fluidraum 16 ist eine Strömungsverbindung zwischen dem Fluidkanal 7 und dem Kupplungsgegenelement 5 herstellbar. Der Dichtring 9 begrenzt über seine gesamte Erstreckung in axialer Richtung den Fluidraum 16, steht also durchgehend mit diesem in Strömungsverbindung.

Der Dichtring 9 ist in der Dichtungsaufnahme 8 in axialer Richtung verlagerbar gelagert, nämlich innerhalb eines bestimmten Spiels. Die Lagerung wird mithilfe einer Formschlusseinrichtung 17 des Dichtrings 9 und einer Formschlussgegeneinrichtung 18 des Kupplungskörpers 3 erzielt. Die Formschlusseinrichtung 17 ist hierbei als Formschlussaufnahme und die Formschlussgegeneinrichtung 18 als in die Formschlussaufnahme eingreifender Formschlussvorsprung ausgestaltet. Die Formschlusseinrichtungen 17 und die Formschlussgegeneinrichtung 18 greifen derart ineinander ein, dass zwar der Dichtring 9 in der Dichtungsaufnahme 8 mit Spiel gehalten, jedoch in Umfangsrichtung verlagerbar ist. In anderen Worten ist der Dichtring 9 in der Dichtungsaufnahme 8 bezüglich der Längsmittelachse 10 drehbar gelagert.

Der Dichtring 9 verfügt über einen Grundkörper 19, an welchem die Formschlusseinrichtung 17 ausgebildet ist. Von dem Grundkörper 19 geht in axialer Richtung einerseits ein Dichtwulst 20 und andererseits eine Dichtlippe 21 aus. Der Dichtwulst 20 und die Dichtlippe 21 nehmen insoweit den Grundkörper 19 zwischen sich auf. Sowohl der Dichtwulst 20 als auch die Dichtlippe 21 sind ausgehend von dem Grundkörper 19 in die diesem abgewandte Richtung in radialer Richtung nach innen geneigt.

Der Dichtwulst 20 dient dem Herstellen einer dichten Verbindung zu dem Kupplungsgegenelement 5 beziehungsweise einem weiteren Dichtring des Kupplungsgegenelements 5. Über die Dichtlippe 21 stützt sich der Dichtring 9 hingegen an der Stützwand 12 ab. Die Dichtlippe 21 ist dazu ausgestaltet, in radialer Richtung nach innen ausgelenkt zu werden, wenn der Grundkörper 19 des Dichtrings 9 auf die Stützwand 12 zu verlagert wird. Da die Dichtlippe 21 elastisch ist, wird hierdurch eine Federkraft bewirkt, welche den Grundkörper 19 in Axialrichtung von der Stützwand 12 fort drängt. Die von der Dichtlippe 21 bewirkte Federkraft kann auch als Rückstellkraft bezeichnet werden. Es ist erkennbar, dass die Dichtlippe 21 in einer vergleichsweise kleinen Ringfläche an der Stützwand 12 anliegt. Näherungsweise liegt ein Linienkontakt vor. Hierdurch wird ein leichtgängiges Drehen des Dichtrings 9 ermöglicht.

Die Figur 2 zeigt das Kupplungselement 1 in mit dem Kupplungsgegenelement 5 der Fluidkupplung 2 gekoppeltem Zustand. Deutlich ist zu erkennen, dass die Kopplungsmittel 4 mit Kopplungsgegenmitteln 22 des Kupplungsgegenelements 5 formschlüssig zusammenwirken, um das Kupplungselement 1 und das Kupplungsgegenelement 5 formschlüssig miteinander zu koppeln. Ebenso ist es erkennbar, dass in dem Kupplungsgegenelement 5 ein weiterer Dichtring 23 angeordnet ist, welcher identisch zu dem Dichtring 9 ausgestaltet ist. In der vorliegenden vereinfachten Darstellung überlappen die Dichtringe 9 und 23 miteinander. Tatsächlich liegen sie stirnseitig aneinander an und drängen sich gegenseitig in die Richtung ihres jeweiligen Kupplungselements 1 beziehungsweise Kupplungsgegenelements 5, sodass die jeweilige Dichtlippe 21 ausgelenkt wird. Es ist weiterhin erkennbar, dass nach dem Koppeln des Kupplungselements 1 und des Kupplungsgegenelements 5 miteinander zwischen ihren Kupplungskörpern 3 ein Spalt 24 vorliegt. Dieser wird mithilfe der Dichtringe 9 und 23 dicht verschlossen, sodass der Fluidkanal 7 gegenüber einer Außenumgebung des der Fluidkupplung 2 dicht ist. Grundsätzlich kann auf den weiteren Dichtring 23 auch verzichtet werden. In diesem Fall liegt der Dichtring 9 dichtend an dem Kupplungsgegenelement 5 beziehungsweise einem Grundkörper des Kupplungsgegenelements 5 an.

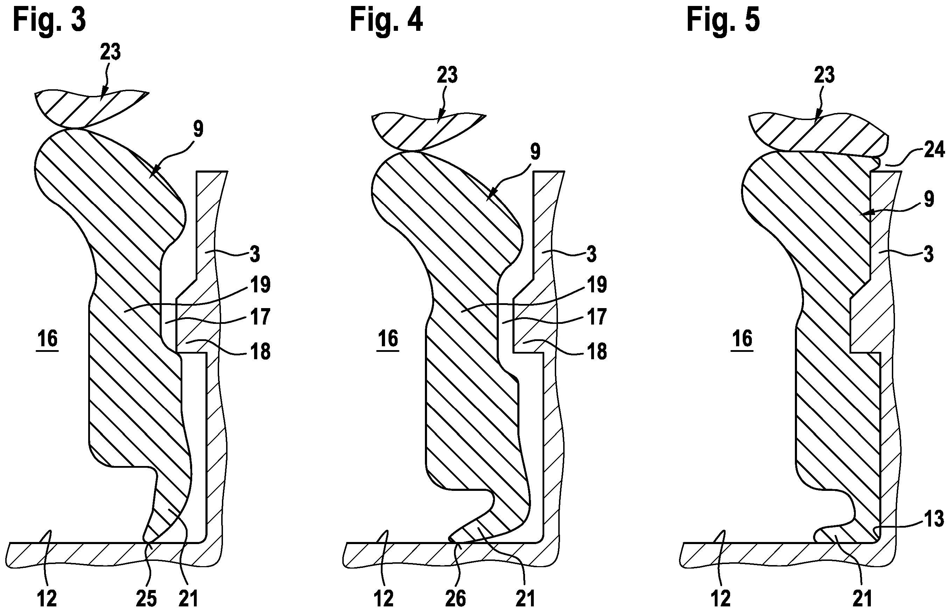

Die Figur 3 zeigt eine schematische Längsschnittdarstellung des Kupplungskörpers 3, des Dichtrings 9 sowie des Dichtrings 23. Dargestellt ist der Grundkörper 19 in einer ersten Stellung. In dieser liegt die Dichtlippe 21 in einer ersten Ringfläche 25 an der Stützwand 12 an. Die Formschlusseinrichtung 17 und die Formschlussgegeneinrichtung 18 wirken zusammen, um eine Verlagerung des Dichtrings 9 in die von der Stützwand 12 abgewandte Richtung zu unterbinden. Zugelassen ist lediglich eine Verlagerung des Grundkörpers 19 auf die Stützwand 12 zu, nämlich in Richtung einer zweiten Stellung des Grundkörpers 19. Die gezeigte Anordnung der Dichtlippe 21 und insbesondere ihre Verformung durch das Anliegen an der Stützwand 12 sind rein beispielhaft dargestellt.

Die Figur 4 zeigt wiederum eine schematische Längsschnittdarstellung des Kupplungskörpers 3, des Dichtrings 9 sowie des weiteren Dichtrings 23. Der Dichtring 9 beziehungsweise sein Grundkörper 19 liegt nun in der zweiten Stellung vor, in welcher er näher an der Stützwand 12 liegt als in der ersten Stellung. Folglich lassen die Formschlusseinrichtung 17 und die Formschlussgegeneinrichtung 18 sowohl eine Verlagerung des Grundkörpers 19 auf die Stützwand 12 zu als auch von der Stützwand 12 fort zu. In der zweiten Stellung ist die Dichtlippe 21 in radialer Richtung weiter ausgelenkt als in der ersten Stellung. Entsprechend liegt sie in einer zweiten Ringfläche 26 an der Stützwand 12 an, welche in radialer Richtung bezüglich der Längsmittelachse 10 weiter innen liegt als die erste Ringfläche 25. Aufgrund der elastischen Verformung der Dichtlippe 21 wird eine Federkraft erzielt, welche den Grundkörper 19 von der Stützwand 12 fort drängt. Werden also das Kupplungselement 1 und das Kupplungsgegenelement 5 voneinander entfernt, zu drängt die Federkraft den Grundkörper 19 wieder in Richtung seiner Ausgangsstellung beziehungsweise bis in die Ausgangsstellung.

Die Figur 5 zeigt erneut die schematische Längsschnittdarstellung des Kupplungskörpers 3, des Dichtrings 9 sowie des Dichtrings 23. Während zuvor die Fluidkupplung 2 in drucklosem Zustand vorlag, die Dichtringe 9 und 23 also nicht mit Druck beaufschlagt waren, liegt nun in dem Fluidraum 16 ein bestimmter Fluiddruck vor, beispielsweise mindestens 5 bar, mindestens 10 bar oder mehr. Besonders bevorzugt ist das Kupplungselement 1 für einen Berstdruck von mindestens 60 bar, mindestens 80 oder mindestens 100 bar ausgelegt. Ein normaler Betriebsdruck des Kupplungselements 1 beträgt beispielsweise mindestens 20 bar, mindestens 30 bar oder mindestens 40 bar. Durch die Druckbeaufschlagung der Dichtringe 9 und 23 werden diese in radialer Richtung nach außen gedrängt. Entsprechend liegt der Dichtring 9 an der Innenwand 11 an. Die Druckbeaufschlagung hat zudem zur Folge, dass der Dichtwulst 20 in den Spalt 24 hinein gedrängt wird, sodass er diesen zuverlässig verschließt und gegenüber dem Fluidraum 16 abdichtet. Es ist weiterhin zu erkennen, dass die Dichtlippe 21 sowohl an die Innenwand 12 als auch an die Stützwand 12 gedrängt wird, sodass sie an beiden flächig anliegt. Hierdurch wird ein Hinterströmen des Dichtrings 9 mit dem Fluid zuverlässig unterbunden, insbesondere da sich die Dichtlippe 21 an den Übergang zwischen Innenwand 11 und Stützwand 12, beispielsweise die Rundung 13, anschmiegt.

Die beschriebene Ausgestaltung des Kupplungselements 1 ermöglicht ein äußerst leichtgängiges Koppeln des Kupplungselements 1 mit dem Kupplungsgegenelement 5 aufgrund der Drehbarkeit des Dichtrings 9. Zudem wird eine hervorragende Dichtheit der Fluidkupplung 2 sichergestellt, da sich die Dichtlippe 21 bei Druckbeaufschlagung flächig an gegeneinander angewinkelte Flächen anschmiegt, nämlich an die Innenwand 11 und die Stützwand 12.

### BEZUGSZEICHENLISTE

- 1: Kupplungselement
- 2: Fluidkupplung
- 3: Kupplungskörper
- 4: Kopplungsmittel
- 5: Kupplungsgegenelement
- 6: Fluidanschluss
- 7: Fluidkanal
- 8: Dichtungsaufnahme
- 9: Dichtring
- 10: Längsmittelachse
- 11: Innenwand
- 12: Stützwand
- 13: Rundung
- 14: Fase
- 15: Fluidkanalwand
- 16: Fluidraum
- 17: Formschlusseinrichtung
- 18: Formschlussgegeneinrichtung
- 19: Grundkörper
- 20: Dichtwulst
- 21: Dichtlippe
- 22: Kopplungsgegenmittel
- 23: Dichtring
- 24: Spalt
- 25: 1. Ringfläche
- 26: 2. Ringfläche

## Patentansprüche

1. Kupplungselement (1) für eine Fluidkupplung (2), mit Kopplungsmitteln (4) zum reversiblen Koppeln des Kupplungselements (1) mit einem Kupplungsgegenelement (5) der Fluidkupplung (2) und mit einem Dichtring (9) zur Abdichtung einer Fluidverbindung bei mit dem Kupplungsgegenelement (5) gekoppeltem Kupplungselement (1), wobei der Dichtring (9) in einem Kupplungskörper (3) des Kupplungselements (1) drehbar angeordnet ist, wobei ein Grundkörper (19) des Dichtrings (9) bezüglich einer Längsmittelachse (10) des Kupplungskörpers (3) mit Spiel in axialer Richtung in einer in dem Kupplungskörper (3) ausgestalteten Dichtungsaufnahme (8) angeordnet ist und von dem Grundkörper (19) in axialer Richtung eine elastische Dichtlippe (21) ausgeht, die in radialer Richtung nach innen geneigt ist und über die sich der Dichtring (9) zumindest zeitweise an einer die Dichtungsaufnahme (8) in axialer Richtung begrenzenden Stützwand (12) abstützt, **dadurch gekennzeichnet, dass** der Dichtring (9) auf seiner in radialer Richtung außen liegenden Seite eine als Formschlussaufnahme ausgestaltete Formschlusseinrichtung (17) aufweist, die mit einer als in die Formschlussaufnahme eingreifender Formschlussvorsprung vorliegenden Formschlussgegeneinrichtung (18) des Kupplungskörpers (3) in Formschlusseingriff steht, um den Grundkörper (19) mit Spiel in axialer Richtung in der Dichtungsaufnahme (8) zu halten, wobei die Formschlusseinrichtung und die Formschlussgegeneinrichtung zwei Endanschläge bilden, zwischen welchen der Dichtring verlagerbar ist, wobei das Spiel in axialer Richtung derart gewählt ist, dass die Dichtlippe in jeder Stellung des Dichtrings an der Stützwand anliegt und vorgespannt ist.

2. Kupplungselement nach Anspruch 1, **dadurch gekennzeichnet, dass** der Dichtring (9) in axialer Richtung durchgehend einen zur Durchströmung mit Fluid vorgesehenen und ausgestalteten Fluidraum (16) in radialer Richtung nach außen begrenzt.

3. Kupplungselement nach einem der vorhergehenden Ansprüche, **dadurch gekennzeichnet, dass** die Dichtungsaufnahme (8) in radialer Richtung größere Abmessungen aufweist als ein in einem Fluidanschluss (6) des Kupplungselements (1) ausgebildeter Fluidkanal (7), der in die Dichtungsaufnahme (8) einmündet, und/oder dass der von dem Dichtring (9) begrenzte Fluidraum (16) in radialer Richtung größere Abmessungen aufweist als der Fluidkanal (7).

4. Kupplungselement nach einem der vorhergehenden Ansprüche, **dadurch gekennzeichnet, dass** die Formschlussaufnahme in axialer Richtung Abmessungen aufweist, die um einen Faktor von mindestens 1,25, mindestens 1,5, mindestens 1,75 oder mindestens 2,0 größer sind als Abmessungen des Formschlussvorsprungs in derselben Richtung.

5. Kupplungselement nach einem der vorhergehenden Ansprüche, **dadurch gekennzeichnet, dass** die Dichtlippe (21) durch einen Rücksprung des Dichtrings (9) gebildet ist, wobei der Grundkörper (19) angrenzend an die Dichtlippe (21) eine Materialstärke aufweist, die um einen Faktor von mindestens 2,0, mindestens 2,5 oder mindestens 3,0 größer ist als eine Materialstärke der Dichtlippe (21), welche diese an den Grundkörper (19) angrenzend aufweist.

6. Kupplungselement nach einem der vorhergehenden Ansprüche, **dadurch gekennzeichnet, dass** im Längsschnitt gesehen die Materialstärke der Dichtlippe (21) ausgehend von ihrer dem Grundkörper (19) zugewandten Seite in die dem Grundkörper (19) abgewandte Richtung zumindest abschnittsweise abnimmt.

7. Kupplungselement nach einem der vorhergehenden Ansprüche, **dadurch gekennzeichnet, dass** die Dichtlippe (21) im Längsschnitt gesehen in radialer Richtung außen von einer Dichtlippenaußenwand und in radialer Richtung innen von einer Dichtlippeninnenwand begrenzt ist, wobei die Dichtlippenaußenwand und die Dichtlippeninnenwand jeweils zumindest abschnittsweise gleichsinnig gekrümmt sind.

8. Kupplungselement nach einem der vorhergehenden Ansprüche, **dadurch gekennzeichnet, dass** die Dichtlippe (21) in einer ersten axialen Stellung des Dichtrings (9) an einer ersten Ringfläche (24) der Stützwand (12) und in einer von der ersten axialen Stellung verschiedenen zweiten axialen Stellung an einer zweiten Ringfläche (26) der Stützwand (12) anliegt, wobei die zweite Ringfläche (26) in radialer Richtung weiter innen liegt als die erste Ringfläche (25).

9. Kupplungselement nach einem der vorhergehenden Ansprüche, **dadurch gekennzeichnet, dass** die Dichtlippe (21) zumindest zeitweise eine Federkraft bewirkt, die den Dichtring (9) in Richtung der ersten axialen Stellung drängt.

10. Kupplungselement nach einem der vorhergehenden Ansprüche, **dadurch gekennzeichnet, dass** der Dichtring (9) auf seiner der Dichtlippe (21) in axialer Richtung abgewandten Seite einen Dichtwulst (20) aufweist, der in radialer Richtung nach innen geneigt ist und/oder eine Materialstärke aufweist, die um einen Faktor von mindestens 2,0, mindestens 2,5 oder mindestens 3,0 größer ist als die größte Materialstärke der Dichtlippe (21) über ihre Erstreckung hinweg.

11. Kupplungselement nach einem der vorhergehenden Ansprüche, **dadurch gekennzeichnet, dass** der Dichtwulst (20) auf seiner der Dichtlippe (21) abgewandten Seite einen Radius aufweist, der größer ist als ein Radius der Dichtlippe (21) auf ihrer dem Dichtwulst (20) abgewandten Seite.

12. Fluidkupplung (2) mit einem Kupplungselement (1) nach einem oder mehreren der vorhergehenden Ansprüche und mit einem Kupplungsgegenelement (5), wobei das Kupplungselement (1) über Kopplungsmittel (4) zum reversiblen Koppeln des Kupplungselements (1) mit dem Kupplungsgegenelement (5) der Fluidkupplung (2) und über einen Dichtring (9) zur Abdichtung einer Fluidverbindung bei mit dem Kupplungsgegenelement (5) gekoppeltem Kupplungselement (1) verfügt, wobei der Dichtring (9) in einem Kupplungskörper (3) des Kupplungselements (1) drehbar angeordnet ist, wobei ein Grundkörper (19) des Dichtrings (9) in einer in dem Kupplungskörper (3) ausgestalteten Dichtungsaufnahme (8) angeordnet ist und von dem Grundkörper (19) in axialer Richtung eine elastische Dichtlippe (21) ausgeht, die in radialer Richtung nach innen geneigt ist und über die sich der Dichtring (9) zumindest zeitweise an einer die Dichtungsaufnahme (8) in axialer Richtung begrenzenden Stützwand (12) abstützt, **dadurch gekennzeichnet, dass** der Dichtring (9) auf seiner in radialer Richtung außen liegenden Seite eine als Formschlussaufnahme ausgestaltete Formschlusseinrichtung (17) aufweist, die mit einer als in die Formschlussaufnahme eingreifender Formschlussvorsprung vorliegenden Formschlussgegeneinrichtung (18) des Kupplungskörpers (3) in Formschlusseingriff steht, um den Grundkörper (19) mit Spiel in axialer Richtung in der Dichtungsaufnahme (8) zu halten, wobei die Formschlusseinrichtung und die Formschlussgegeneinrichtung zwei Endanschläge bilden, zwischen welchen der Dichtring verlagerbar ist, wobei das Spiel in axialer Richtung derart gewählt ist, dass die Dichtlippe in jeder Stellung des Dichtrings an der Stützwand anliegt und vorgespannt ist.

13. Fluidkupplung nach Anspruch 12, **dadurch gekennzeichnet, dass** das Kupplungsgegenelement (5) über über Kopplungsgegenmittel (22) zum reversiblen Koppeln des Kupplungsgegenelements (5) mit dem Kupplungselement (1) der Fluidkupplung (2) verfügt, wobei der Dichtring (9) ein erster Dichtring (9) mehrerer identischer Dichtringe (9, 23) ist und ein zweiter der Dichtringe (9, 23) in einem Kupplungskörper des Kupplungsgegenelements (5) drehbar angeordnet ist.

## Claims

1. Coupling element (1) for a fluid coupling (2), having coupling means (4) for reversibly coupling the coupling element (1) to a coupling counter element (5) of the fluid coupling (2) and having a sealing ring (9) for sealing a fluid connection when the coupling element (1) is coupled to the coupling counter element (5), wherein the sealing ring (9) is rotatably arranged in a coupling body (3) of the coupling element (1), wherein a base body (19) of the sealing ring (9) is arranged with clearance in the axial direction with respect to a longitudinal central axis (10) of the coupling body (3) in a seal receptacle (8) configured in the coupling body (3) and an elastic sealing lip (21) extends from the base body (19) in the axial direction, which lip is inclined inwards in the radial direction and via which the sealing ring (9) is supported at least temporarily on a support wall (12) delimiting the seal receptacle (8) in the axial direction, **characterised in that** the sealing ring (9) comprises on its side lying on the outside in the radial direction a form-fitting device (17) configured as a form-fitting receptacle, which is in form-fitting engagement with a form-fitting counter device (18) of the coupling body (3) present as a form-fitting projection engaging in the form-fitting receptacle, in order to hold the base body (19) with clearance in the axial direction in the seal receptacle (8), wherein the form-fitting device and the form-fitting device form two end stops between which the sealing ring can be displaced, wherein the clearance in the axial direction is selected such that the sealing lip bears against the supporting wall and is prestressed in any position of the sealing ring.

2. Coupling element according to claim 1, **characterised in that** the sealing ring (9) continuously delimits in the axial direction a fluid space (16) provided and configured for the flow of fluid in the radial direction towards the outside.

3. Coupling element according to one of the preceding claims, **characterised in that** the seal receptacle (8) comprises larger dimensions in the radial direction than a fluid channel (7) configured in a fluid connection (6) of the coupling element (1), which opens into the seal receptacle (8), and/or **in that** the fluid space (16) delimited by the sealing ring (9) comprises larger dimensions in the radial direction than the fluid channel (7).

4. Coupling element according to one of the preceding claims, **characterised in that** the form-fitting receptacle comprises dimensions in the axial direction which are larger by a factor of at least 1.25, at least 1.5, at least 1.75 or at least 2.0 than the dimensions of the form-fitting projection in the same direction.

5. Coupling element according to one of the preceding claims, **characterised in that** the sealing lip (21) is formed by a recess of the sealing ring (9), wherein the base body (19) comprises, adjacent to the sealing lip (21), a material thickness which is greater by a factor of at least 2.0, at least 2.5 or at least 3.0 than a material thickness of the sealing lip (21) which the latter comprises adjacent to the base body (19).

6. Coupling element according to one of the preceding claims, **characterised in that**, viewed in longitudinal section, the material thickness of the sealing lip (21) decreases at least in some sections starting from its side facing the base body (19) in the direction facing away from the base body (19).

7. Coupling element according to one of the preceding claims, **characterised in that** the sealing lip (21), viewed in longitudinal section, is delimited in the radial direction on the outside by a sealing lip outer wall and in the radial direction on the inside by a sealing lip inner wall, wherein the sealing lip outer wall and the sealing lip inner wall are each curved in the same direction in some sections.

8. Coupling element according to one of the preceding claims, **characterised in that** the sealing lip (21) bears against a first annular surface (24) of the support wall (12) in a first axial position of the sealing ring (9) and against a second annular surface (26) of the support wall (12) in a second axial position different from the first axial position, wherein the second annular surface (26) lies further inwards in the radial direction than the first annular surface (25).

9. Coupling element according to one of the preceding claims, **characterised in that** the sealing lip (21) causes, at least temporarily, a spring force which presses the sealing ring (9) in the direction of the first axial position.

10. Coupling element according to one of the preceding claims, **characterised in that** the sealing ring (9) comprises, on its side facing away from the sealing lip (21) in the axial direction, a sealing shoulder (20) which is inclined inwards in the radial direction and/or has a material thickness which is greater by a factor of at least 2.0, at least 2.5 or at least 3.0 than the greatest material thickness of the sealing lip (21) over its extension.

11. Coupling element according to one of the preceding claims, **characterised in that** the sealing shoulder (20) comprises a radius on its side facing away from the sealing lip (21) which is larger than a radius of the sealing lip (21) on its side facing away from the sealing shoulder (20).

12. Fluid coupling (2) having a coupling element (1) according to one or more of the preceding claims and having a coupling counter element (5), wherein the coupling element (1) has coupling means (4) for reversibly coupling the coupling element (1) to the coupling counter element (5) of the fluid coupling (2) and has a sealing ring (9) for sealing a fluid connection when the coupling element (1) is coupled to the coupling counter element (5), wherein the sealing ring (9) is rotatably arranged in a coupling body (3) of the coupling element (1), wherein a base body (19) of the sealing ring (9) is arranged in a seal receptacle (8) configured in the coupling body (3) and a resilient sealing lip (21) extends from the base body (19) in the axial direction, which is inclined inwards in the radial direction and via which the sealing ring (9) is supported at least temporarily on a supporting wall (12) delimiting the sealing receptacle (8) in the axial direction, **characterised in that** the sealing ring (9) comprises on its side lying on the outside in the radial direction a form-fitting device (17) configured as a form-fitting receptacle, which is in form-fitting engagement with a form-fitting mating device (18) of the coupling body (3) present as a form-fitting projection engaging in the form-fitting receptacle, in order to hold the base body (19) with play in the axial direction in the seal receptacle (8), wherein the form-fitting device and the form-fitting counter device form two end stops between which the sealing ring can be displaced, wherein the play in the axial direction is selected such that the sealing lip bears against the supporting wall and is prestressed in any position of the sealing ring.

13. Fluid coupling according to claim 12, **characterised in that** the coupling counter element (5) has coupling counter means (22) for reversibly coupling the coupling counter element (5) to the coupling element (1) of the fluid coupling (2), wherein the sealing ring (9) is a first sealing ring (9) of a plurality of identical sealing rings (9, 23) and a second of the sealing rings (9, 23) is rotatably arranged in a coupling body of the coupling counter element (5).

## Revendications

1. Élément d'accouplement (1) pour un accouplement hydraulique (2), comprenant des moyens d'accouplement (4) permettant d'accoupler de manière réversible l'élément d'accouplement (1) avec un contre-élément d'accouplement (5) de l'accouplement hydraulique (2), et comprenant une bague d'étanchéité (9) permettant d'assurer l'étanchéité d'une liaison fluidique lorsque l'élément d'accouplement (1) est accouplé avec le contre-élément d'accouplement (5), dans lequel la bague d'étanchéité (9) est agencée de manière à pouvoir tourner dans un corps d'accouplement (3) de l'élément d'accouplement (1), dans lequel un corps de base (19) de la bague d'étanchéité (9) est agencé dans un logement de joint (8) ménagé dans le corps d'accouplement (3) avec du jeu dans la direction axiale par rapport à un axe central longitudinal (10) du corps d'accouplement (3), et dans lequel une lèvre d'étanchéité (21) élastique, inclinée vers l'intérieur dans la direction radiale et par l'intermédiaire de laquelle la bague d'étanchéité (9) s'appuie au moins temporairement contre une paroi d'appui (12) délimitant le logement de joint (8) dans la direction axiale, part du corps de base (19) dans la direction axiale, **caractérisé en ce que** la bague d'étanchéité (9) présente, sur son côté situé à l'extérieur dans la direction radiale, un dispositif de blocage par complémentarité de forme (17) qui est réalisé sous la forme d'un logement de blocage par complémentarité de forme et qui est en prise par complémentarité de forme avec un dispositif homologue de blocage par complémentarité de forme (18) du corps d'accouplement (3) présent sous la forme d'une saillie de blocage par complémentarité de forme venant en prise dans le logement de blocage par complémentarité de forme, afin de maintenir un jeu dans la direction axiale entre le corps de base (19) et le logement de joint (8), dans lequel le dispositif de blocage par complémentarité de forme et le dispositif homologue de blocage par complémentarité de forme forment deux butées d'extrémité entre lesquelles la bague d'étanchéité peut être déplacée, dans lequel le jeu dans la direction axiale est choisi de telle manière que, dans chaque position de la bague d'étanchéité, la lèvre d'étanchéité repose contre la paroi d'appui et est précontrainte.

2. Élément d'accouplement selon la revendication 1, **caractérisé en ce que** la bague d'étanchéité (9) délimite dans la direction radiale vers l'extérieur et de manière continue dans la direction axiale une chambre de fluide (16) prévue et conçue pour être parcourue par un fluide.

3. Élément d'accouplement selon l'une quelconque des revendications précédentes, **caractérisé en ce que** le logement de joint (8) présente dans la direction radiale des dimensions supérieures à celles d'un canal de fluide (7) formé au sein d'un raccord de fluide (6) de l'élément d'accouplement (1) et débouchant dans le logement de joint (8), et/ou **en ce que** la chambre de fluide (16) délimitée par la bague d'étanchéité (9) présente dans la direction radiale des dimensions supérieures à celles du canal de fluide (7).

4. Élément d'accouplement selon l'une quelconque des revendications précédentes, **caractérisé en ce que** le logement de blocage par complémentarité de forme présente dans la direction axiale des dimensions qui sont supérieures d'un facteur d'au moins 1,25, d'au moins 1,5, d'au moins 1,75 ou d'au moins 2,0 aux dimensions de la saillie de blocage par complémentarité de forme dans la même direction.

5. Élément d'accouplement selon l'une quelconque des revendications précédentes, **caractérisé en ce que** la lèvre d'étanchéité (21) est formée grâce à un renfoncement de la bague d'étanchéité (9), dans lequel le corps de base (19) présente, à proximité adjacente de la lèvre d'étanchéité (21), une épaisseur de matériau qui est supérieure d'un facteur d'au moins 2,0, d'au moins 2,5 ou d'au moins 3,0 à une épaisseur de matériau de la lèvre d'étanchéité (21) à proximité adjacente du corps de base (19).

6. Élément d'accouplement selon l'une quelconque des revendications précédentes, **caractérisé en ce que,** vue en coupe longitudinale, l'épaisseur de matériau de la lèvre d'étanchéité (21) diminue au moins par sections dans la direction opposée au corps de base (19) à partir de son côté tourné vers le corps de base (19).

7. Élément d'accouplement selon l'une quelconque des revendications précédentes, **caractérisé en ce que,** vue en coupe longitudinale, la lèvre d'étanchéité (21) est délimitée à l'extérieur dans la direction radiale par une paroi extérieure de lèvre d'étanchéité et à l'intérieur dans la direction radiale par une paroi intérieure de lèvre d'étanchéité, dans lequel la paroi extérieure de lèvre d'étanchéité et la paroi intérieure de lèvre d'étanchéité sont respectivement incurvées dans le même sens au moins par sections.

8. Élément d'accouplement selon l'une quelconque des revendications précédentes, **caractérisé en ce que,** dans une première position axiale de la bague d'étanchéité (9), la lèvre d'étanchéité (21) repose contre une première surface annulaire (24) de la paroi d'appui (12) et, dans une seconde position axiale différente de la première position axiale, repose contre une seconde surface annulaire (26) de la paroi d'appui (12), dans lequel la seconde surface annulaire (26) est située davantage à l'intérieur dans la direction radiale que ne l'est la première surface annulaire (25).

9. Élément d'accouplement selon l'une quelconque des revendications précédentes, **caractérisé en ce que** la lèvre d'étanchéité (21) provoque au moins temporairement une force élastique qui pousse la bague d'étanchéité (9) en direction de la première position axiale.

10. Élément d'accouplement selon l'une quelconque des revendications précédentes, **caractérisé en ce que** la bague d'étanchéité (9) présente sur son côté opposé à la lèvre d'étanchéité (21) dans la direction axiale un bourrelet d'étanchéité (20) qui est incliné vers l'intérieur dans la direction radiale et/ou présente une épaisseur de matériau qui est supérieure d'un facteur d'au moins 2,0, d'au moins 2,5 ou d'au moins 3,0 à la plus grande épaisseur de matériau de la lèvre d'étanchéité (21) sur toute son étendue.

11. Élément d'accouplement selon l'une quelconque des revendications précédentes, **caractérisé en ce que** le bourrelet d'étanchéité (20) présente sur son côté opposé à la lèvre d'étanchéité (21) un rayon qui est supérieur à un rayon de la lèvre d'étanchéité (21) sur son côté opposé au bourrelet d'étanchéité (20).

12. Accouplement hydraulique (2) comprenant un élément d'accouplement (1) selon l'une quelconque ou plusieurs des revendications précédentes et comprenant un contre-élément d'accouplement (5), dans lequel l'élément d'accouplement (1) dispose de moyens d'accouplement (4) permettant d'accoupler de manière réversible l'élément d'accouplement (1) avec le contre-élément d'accouplement (5) de l'accouplement hydraulique (2) et d'une bague d'étanchéité (9) permettant d'assurer l'étanchéité d'une liaison fluidique lorsque l'élément d'accouplement (1) est accouplé avec le contre-élément d'accouplement (5), dans lequel la bague d'étanchéité (9) est agencée de manière à pouvoir tourner dans un corps d'accouplement (3) de l'élément d'accouplement (1), dans lequel un corps de base (19) de la bague d'étanchéité (9) est agencé dans un logement de joint (8) ménagé dans le corps d'accouplement (3), et dans lequel une lèvre d'étanchéité (21) élastique, inclinée vers l'intérieur dans la direction radiale et par l'intermédiaire de laquelle la bague d'étanchéité (9) s'appuie au moins temporairement contre une paroi d'appui (12) délimitant le logement de joint (8) dans la direction axiale, part du corps de base (19) dans la direction axiale, **caractérisé en ce que** la bague d'étanchéité (9) présente, sur son côté situé à l'extérieur dans la direction radiale, un dispositif de blocage par complémentarité de forme (17) qui est réalisé sous la forme d'un logement de blocage par complémentarité de forme et qui est en prise par complémentarité de forme avec un dispositif homologue de blocage par complémentarité de forme (18) du corps d'accouplement (3) présent sous la forme d'une saillie de blocage par complémentarité de forme venant en prise dans le logement de blocage par complémentarité de forme, afin de maintenir un jeu dans la direction axiale entre le corps de base (19) et le logement de joint (8), dans lequel le dispositif de blocage par complémentarité de forme et le dispositif homologue de blocage par complémentarité de forme forment deux butées d'extrémité entre lesquelles la bague d'étanchéité peut être déplacée, dans lequel le jeu dans la direction axiale est choisi de telle manière que, dans chaque position de la bague d'étanchéité, la lèvre d'étanchéité repose contre la paroi d'appui et est précontrainte.

13. Accouplement fluidique selon la revendication 12, **caractérisé en ce que** le contre-élément d'accouplement (5) dispose de moyens homologues d'accouplement (22) permettant d'accoupler de manière réversible le contre-élément d'accouplement (5) avec l'élément d'accouplement (1) de l'accouplement fluidique (2), dans lequel la bague d'étanchéité (9) est une première bague d'étanchéité (9) parmi plusieurs bagues d'étanchéité (9, 23) identiques et une deuxième bague d'étanchéité parmi les bagues d'étanchéité (9, 23) est agencée de manière à pouvoir tourner dans un corps d'accouplement du contre-élément d'accouplement (5).
